# EUROPEAN PATENT SPECIFICATION

(11) **EP 2 137 511 B1**
(45) Date of publication and mention of the grant of the patent: **02.01.2019**
(21) Application number: 08719096.3
(22) Date of filing: 10.04.2008
(51) Int. Cl.: G01N 17/04

(54) **CORROSION SENSORS**
KORROSIONSSENSOREN
CAPTEURS DE CORROSION

(30) Priority: 16.04.2007 GB 0707168; 16.04.2007 EP 07270019
(43) Date of publication of application: 30.12.2009
(73) Proprietor: BAE Systems PLC, London SW1Y 5AD (GB)
(72) Inventor: HEBBRON, Michael, Christopher, Bristol Avon BS34 7QW (GB); MORGAN, Peter, Charles, Bristol Avon BS34 7QW (GB)
(74) Representative: McBrien, Matthew Nicholas
(86) International application number: PCT/GB2008/050251
(87) International publication number: WO 2008/125878

(56) References cited:
- US-A- 3 061 911
- US-A- 4 780 664
- US-A1- 2003 029 232

## Description

This invention relates to corrosion sensors for detecting the action of corrosive media acting on a metallic material when mounted in situ adjacent a location in the metallic material.

Corrosion is a problem which leads to high maintenance and repair overheads in many different industries. Prompt detection of problems caused by corrosion is necessary in order for effective mitigation strategies to be put in place, and so various different methods of detecting corrosion in a metallic material have been developed.

Two known types of corrosion sensor are described in the Applicant's published European Patent Applications, Publication Numbers EP1554563 and EP1546679. These prior-known sensors comprise patterned conductive thin films formed on a substrate. The film, which is made of a material that mimics the characteristics of the bulk material to which the sensor is attached, defines a plurality of serpentine tracks extending between common terminals. These sensors can be used as resistive sensors, in which case the resistance of the sensors is measured over a period of time. The result of the action of corrosive media on the tracks is an increase in the overall resistance of the sensor, as measured between the common terminals. This measured increase in resistance can then be related to the effects of corrosion acting on the bulk structure to which the sensor is attached.

The shape and configuration of the serpentine tracks of the above prior-known sensors is determined, in part, by the requirement for the behaviour of the film, in the presence of corrosive media, to mimic the behaviour of the bulk material. This is essential in order for the measured increase in resistance to be related to the effects of corrosion acting on the bulk structure to which the sensor is attached. It is disclosed in the above-referenced applications that it is necessary to maintain a certain minimum radius of curvature for the bends on the serpentine tracks in order to avoid an enhancement of the rate of corrosion at sharp corners. It is further necessary to maintain a certain minimum separation between the tracks, again in order to avoid an enhancement of the rate of corrosion because of geometric effects.

An alternative corrosion sensing strategy is proposed in the paper "Corrosion Sensors in Platform Management" by D. G. Dixon, M. C. Hebbron, S. J. Harris and A. Rezai and presented at the 1st World Congress on Corrosion in the Military, 1st June 2005. The authors refer to the above-referenced published patent applications, and propose a similar resistive sensor. However, the sensor disclosed by Dixon et al. is covered with a corrosion-inhibiting primer paint that is provided with an intentional defect in order to mimic, for example, the effect of a crack. The sensor is located on the structure to be monitored. At first, the defect will be protected from corrosive media by inhibitor species leaching from the paint, but, once the reservoir of inhibitor is exhausted, the sensor tracks will corrode, and a corresponding increase in the sensor resistance can be measured. Corrective action can then be taken. Such sensors can be termed "Inhibitor Depletion Sensors".

US Patent No. 4780664 describes a corrosion sensor comprising two electrodes on a substrate. Each electrode has a terminal connected to a respective flat plate, wherein a long, thin serpentine section is provided between the two flat plates.

US Patent Application Publication No. 2003/029232 describes a coupon for measuring corrosion rates, comprising elongated thin metal conductors on respective opposing surfaces of a disc-shaped substrate. Each conductor is configured as a spiral extending outwardly from the centre toward the periphery of the substrate.

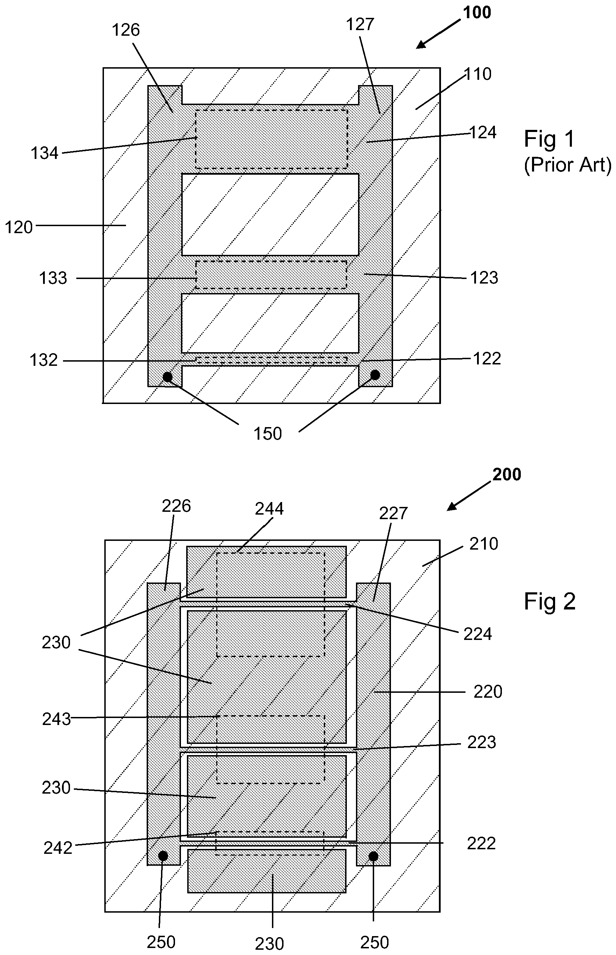

One particular prior-known corrosion sensor 100, of the inhibitor depletion type described above, is illustrated in Figure 1 of the accompanying drawings. Sensor 100 comprises a substrate 110, a patterned conductive thin film 120, and paint substantially covering the substrate 110 and the patterned conductive thin film 120. The area covered by the conductive thin film is indicted by dense shading, whilst that covered by paint is indicated by more sparse shading. The film 120 is arranged in a ladder-like configuration such that there are three tracks 122, 123, 124 running between common terminals 126 and 127. Three defects 132, 133, and 134 are introduced into paint 130, with each defect being provided at the location of one of the tracks 122, 123, and 124. The defects are areas where the protective layer of paint has been removed. However, in the case of an as-fabricated sensor, these areas remain temporarily protected from the effects of corrosion through the effect of inhibitor ions leaching out of the surrounding paint and onto the area of the defect. The tracks 122, 123, 124 are arranged to be wider than their respective defects 132, 133, 134 such that the entire exposed area beneath each defect consists of metallic track material. Each defect is of a different size.

The conductive thin film 120 is formed on the substrate 110 by sputtering. The resultant sputtered film is then annealed in order to increase grain size, so that the film 120 resembles more closely the bulk metallic material that the sensor is intended to monitor. The paint is then applied over the conductive thin film using a mask to define the defects 132, 133, and 134.

In use, the resistance of the sensor 100 between points 150 is monitored over time. The resistance of the sensor remains approximately constant until the protective effect of inhibitor leaching from the paint around the largest defect 134 ceases, because of exhaustion of the reservoir of inhibitor ions in the primer paint. At this point, the resistance will begin to increase as a result of corrosion depleting the amount of material in the conductive track 124. This, in turn, indicates when corrosion will begin to affect metal in other parts of the structure where there may be similar defects. By introducing a number of differently-sized defects, each over one rung of the ladder, a measure of the continuing effects of corrosion is obtained: the track beneath the largest defect 124 will corrode first, followed by that under the intermediate-sized defect 123, followed by that under the smallest-sized defect 122.

Unfortunately, the resistance of inhibitor depletion sensors such as sensor 100 has to date been limited to around 1 Ω. Given that the resistances of the cables and connectors used to attach the sensor to measurement instrumentation is likely to be of a similar order of magnitude, this small resistance value limits the signal-to-noise ratio that is obtainable from the sensor. Moreover, since the resistance is small, a high current, of order 100 mA, is needed in order to obtain a measurable voltage signal. The resistance *R* of the sensor is determined by the resistivity *ρ* of the track material, the length *L* of the tracks, and the cross-sectional area *A* of the tracks through the well-known relationship *R* = *ρL*/*A.* The resistivity of the tracks is determined by choice of track material. Clearly, the track material cannot be changed in order to increase the resistance of the sensor since the track material must be chosen according to the material from which the structure to be monitored is fabricated. The length of the tracks is limited by the need for a compact sensor. The cross-sectional area *A* is determined by the thickness and width of the tracks. The thickness is chosen to remain above 150 nm in order to ensure that corrosion of the tracks will be representative of corrosion of the bulk material, whilst the width of the tracks is limited by the need for the exposed area underneath the defects 132, 133, 134 to consist of track material. The minimum defect width possible is of the order of 0.2 mm. Thus it is difficult to envisage how the resistance of the sensor 100 can be increased in order to overcome the above-mentioned problems.

It is accordingly an aim of the present invention to at least partially overcome or mitigate some of the above mentioned problems with prior known corrosion sensors. It is a further aim to provide a resistive corrosion sensor having a higher resistance than the above-described prior known corrosion sensors. A yet further aim of the invention is to provide a resistive corrosion sensor that can be fabricated more simply than the above described prior-known corrosion sensors.

According to a first aspect of the present invention, there is provided a corrosion sensor for detecting the action of corrosive media on a metallic material when mounted in situ adjacent a location in the metallic material, the corrosion sensor comprising: a substrate; and a patterned conductive thin film formed on the substrate; the thin film defining: first and second terminals; a first conducting track running between the first and the second terminals; and conducting regions separated from the terminals and the first conducting track, and disposed adjacent either side of the first conducting track; characterised in that the thin film defines a plurality of conducting tracks running between the first and second terminals, and a plurality of conducting regions separated from the terminals and the plurality of conducting tracks, the plurality of conducting regions being arranged such that conducting regions are disposed on either side of each of the plurality of conducting tracks.

In this way, the width of the conducting track itself can be made much narrower than is possible in the prior known corrosion sensors. The wettability of the sensor, however, remains at least approximately equal to that of the bulk surface because of the presence of the conducting regions: most of the substrate is covered by the conductive film, rather than the substrate material itself being exposed. This enables a higher resistance sensor to be made whilst reducing the risks of unrepresentative corrosive effects. The wettability of a surface represents the extent to which a droplet of a particular liquid will spread out on that surface. The provision of a plurality of conducting tracks allows the corrosion sensor to provide a better indication of the average effects of corrosion on the bulk material, since, where only one track is present, local effects unrepresentative of the behaviour of the bulk material in the presence of corrosive media may dominate the response of the sensor. Alternatively, where the tracks are formed of a different width, the effects of corrosion can be monitored over an extended period of time. Tracks of different thicknesses may also be used in order to monitor the effects of corrosion over an extended period of time.

The conducting regions may be disposed closely adjacent either side of the first conducting track, such that the rate of corrosion of the first conducting track is increased. The width of the gap can be adjusted to obviate the need for the thin film to be annealed post-deposition. Annealing has previously been necessary to ensure that corrosion of the tracks occurs as rapidly as expected for bulk material, but it has been found that the same effect can be achieved using the narrow gap. It is also possible to further narrow the gap to ensure that the sensor reacts rapidly to any potentially harmful corrosion. There may be first and second gaps defined between the first conducting track and the conducting regions, the gaps having a substantially uniform width. Optionally, the width of the gaps is less than 15 µm. Empirical evidence suggests that gaps of this width lead to an increased rate of corrosion.

Preferably, the corrosion sensor further comprises paint covering substantially the whole of the substrate and the thin film to form a paint layer, which paint comprises a corrosion inhibitor, and which paint layer is provided with a first defect at the location of the first conducting track, the defect extending over at least a part of the conducting regions adjacent the first conducting track. The corrosion sensor can then be used as an inhibitor depletion type sensor, such as the sensor 100 described above. The corrosion sensor of the present invention is particularly suited to use as an inhibitor depletion sensor, since it is in this type of sensor that the problem of low resistance described above has proved particularly difficult to overcome. The presence of the conducting region enables the wettability of the corrosive part of the sensor to remain approximately equal to that of the bulk metallic material on which the sensor is mounted, so that the sensor gives an accurate indication of the effects of corrosion on the bulk structure.

Where a plurality of conducting tracks are defined by the patterned conductive thin film, the paint layer may be provided with plurality of defects including the first defect, each of the defects being provided at a location of one of the plurality of conducting tracks and extending over at least a part of each of the conducting regions adjacent said one of the plurality of conducting tracks. Each of the defects may be of a different size. Such sensors are able to provide an indication of the effects of corrosion over a period of time. The defects may have a width in the range between 0.2 mm and 8 mm. The first defect may be substantially rectangular. Alternatively, the first defect may be substantially circular. The paint layer may be selected to mimic the characteristics of a paint covering the metallic material adjacent to which the sensor is mounted. Such a paint may simply be the same as the paint covering the metallic material, or may be modified in order to mimic the characteristics of the paint covering the metallic material, for example by altering the concentration of inhibitor ions in the paint.

The invention extends to a corrosion sensing system comprising a plurality of corrosion sensors as defined above. The invention further extends to a metallic structure comprising such a corrosion sensing system.

The above and further features of the invention are set forth with particularity in the appended claims and will be described hereinafter with reference to the accompanying drawings in which:
Figure 1 is a schematic view of a prior-known corrosion sensor;
Figure 2 is a schematic view of a corrosion sensor in accordance with a first embodiment of the invention;
Figure 3 is a schematic view of a corrosion sensor in accordance with a second embodiment of the invention; and
Figure 4 is a graph illustrating the expected variation of resistance with time for a corrosion sensor in accordance with an embodiment of the invention.

Various different embodiments of corrosion sensors and corrosion sensing systems in accordance with the invention will now be described. Corrosion sensors and corrosion sensing systems according to the embodiments described below have been applied mainly to aluminium and aluminium alloy structures, and are particularly applicable to such structures when painted with a corrosion inhibiting primer paint. It will, however, be clearly understood by those skilled in the art that the corrosion sensors could be trivially modified in order to function on other metallic structures.

The sensors include conducting tracks whose resistance increases on exposure to corrosive media. The sensors are arranged such that, when placed in situ adjacent a location in a bulk component, the effects of exposure to corrosive media on bulk component can be inferred from the measurable effects of exposure to the same corrosive media on the sensor. The sensors may be mounted in various locations and manners, for example by mounting between the plates of a joint between components, by adhesion to a component using a Mylar™ foil, etc.

A corrosion sensor 200 in accordance with a first embodiment of the invention is shown in Figure 2. Corrosion sensor 200 comprises a substrate 210, and a patterned conductive thin film 220, 230. Film 220 is arranged in a ladder-like configuration such that there are three tracks 222, 223, 224 (that form the "rungs" for the ladder) running between common terminals 226, 227 (that form the "legs" for the ladder). In use of the sensor, electrical connections are made to the sensor from interrogating instrumentation via the common terminals 226, 227 at connection points 250. In addition to the ladder-like configuration 220, there are also provided separate conducting regions 230. These conducting regions are located between conducting tracks 222 and 223, between conducting tracks 223 and 224, above (as shown in Figure 2) conducting track 222, and below (as shown in Figure 2) conducting track 224. The separate conducting regions 230 are positioned closely adjacent the conducting tracks 222, 223, 224, without making electrical contact with the ladder like configuration 220. Thus, there is a conducting region on either side of each conducting track, with a small gap between the conducting track and each conducting region. There is a further small gap between the conducting regions 230 and the common terminals 226, 227. The gap on either side of the conducting track is of uniform width along the entire length of the conducting track, except for those parts of the conducting tracks close to the common terminals 226, 227.

It has been found empirically that, by placing a conducting region (such as one of the regions 230) sufficiently close to a thin film track (such as one of tracks 222, 223, 224), the rate of corrosion of the track is enhanced, by which it is meant that the rate of corrosion of the thin film track is accelerated relative to the rate of corrosion of a bulk sample of the material of the thin film track. The degree of enhancement is dependent on how close the region is to the track. The enhancement effect is amplified as the gap becomes smaller. It has been found that an enhancement effect is clearly visible when the separation is 2 µm. For separations as great as 10 µm, an enhancement effect remains visible, but is significantly reduced, and a measurable effect may be expected when the separation is increased to 12 - 15 µm. Thus, by placing the separate conducting regions 230 closely adjacent the tracks 222, 223, 224, the rate of corrosion of the tracks can be enhanced in a controllable way in dependence on the actual separation between the tracks and the conducting regions.

In the embodiment shown in Figure 2, the conducting regions 230, ladder-like configuration 220, and substrate 210 are covered over the majority of their surfaces by a coating of primer paint. The paint is of a type comprising a leachable corrosion suppressant. Such paints comprise corrosion inhibitors, such as chromate ions, that will leach out of the paint at or around any defects in the paint, thereby providing continued protection against corrosion even in the presence of minor defects in the paint. In Figure 2, the conductive thin film is indicated by the densely shaded area, whilst the areas covered with paint are indicated by the more sparsely shaded area. The paint is of the same type as that covering the bulk structure which the corrosion sensor 200 is to monitor, or may be of a type mimicking that covering the bulk structure. In the present embodiment, a 25 µm thick coating of PR205, a primer paint commercially available from PRC DeSoto, is used. PR205 is a high-solids, chromate-loaded, epoxy-based primer. A suitable topcoat, such as HP03682, also available from PRC DeSoto, is then applied.

Rectangular defects 242, 243, 244 are incorporated into the paint, and indicated in Figure 2 in dashed outline. Each defect 242, 243, 244 is located over a part of one of the tracks 222, 223, 224, and extends over a part of the conducting regions either side of that track. On formation of the defects 242, 243, 244, inhibitor ions will leach out of the paint so as to continue to protect the conducting tracks 222, 223, 224 underlying the defects from corrosive media. However, the continued protection is temporary, lasting only whilst there is a sufficient supply of inhibitor ions leaching from the paint surrounding the defect 244. Where the inhibitor comprises chromate ions, as in the present embodiment, it has been empirically determined that the protective effect persists until the concentration of chromate ions at the defect falls below approximately 10⁻³ mol/l. Once the inhibitor concentration falls below this level, the track will begin to corrode, and its resistance will begin to (measurably) increase. The resistance of the track will continue to increase until the track 224 has corroded through, such that it can no longer form a conducting path between the common terminals 226, 227. The amount of time taken for the track to corrode through will therefore depend on, inter alia, the size of the defect (that will affect the concentration of inhibitor ions at the track); the concentration of inhibitor in the paint of the as-manufactured sensor, and the corrosivity of the environment in which the sensor 200 is placed.

As is shown in Figure 2, each of the defects 242, 243, 244 is of a different size, and thus the duration of continued protection provided by each one of the defects is different. In particular, defect 244 is larger than defect 243, which in turn is larger than defect 242. Each of tracks 222, 223, 224 are the same width, and so, in the presence of corrosive media, track 224, beneath the largest defect, will corrode first, followed by track 223, that is located beneath the next-largest defect 243, followed finally by track 222, that is located beneath the smallest defect 242. Thus, by appropriate sizing of the defects 242, 243, 244, the largest can be arranged purely as a "check" to corrode rapidly after fabrication of the sensor, and thus provide a confirmatory signal that the sensor 200 is functioning; and the intermediate and smallest size defects can be arranged so as to produce an indication as to when it is necessary to fully inspect, and carry out necessary repairs to, the structure on which sensor is installed. For example, the defect widths can be chosen to be 4 mm, 0.5 mm, and 0.05 mm. A trial was carried out using a sensor 200 with three defects, of the above widths, in PR205 paint over tracks in a conductive thin film formed of aluminium alloy 2024-T3 (widely used in aircraft manufacture). The sensor was subjected to a neutral salt spray. The track beneath the 4 mm defect corroded through in half a day, and the track beneath the 0.5 mm defect corroded through in six days. The track beneath the thinnest track corroded through in fifty days.

A particular advantage of the sensor 200 in comparison to the prior-known sensor 100 is that its overall resistance, as measured between the connection points 250, can be of order 600 Ω to 1 kΩ, as compared to the maximum possible values of order only 1 Ω possible with the prior art. This increase in the possible achievable resistance results from the fact that the tracks 222, 223, 224 of sensor 200 can be made much narrower than the corresponding tracks 122, 123, 124 of sensor 100. The narrowing is possible because of the presence of the conducting regions 230. Whilst their proximity to the conducting tracks 222, 223, 224 accelerates corrosion of the conducting tracks, their presence allows the paint defects 242, 243, 244 to be significantly wider than the conducting tracks, in contrast to the prior-known sensor 100. The tracks 222, 223, 224 can all be of uniform width, and can be made as narrow as 1 µm if desired. Such a narrow track will corrode rapidly once the inhibitor supply from the paint is exhausted. Tracks of greater widths, for example in the range 5 to 10 µm, may be more robust, and, as will be appreciated by those skilled in the art, wider tracks can also be used if desired. However, in order to maintain as high a resistance as possible, it is preferable for the tracks to be kept as narrow as feasible for a particular sensor.

The resistance of sensor 200 is thus two to three orders of magnitude larger than the maximum possible resistance obtainable with a sensor of the prior known type, such as sensor 100 described above. This large sensor resistance will be significantly greater than that of any cables or connectors used for connecting sensor 200 to any instrumentation necessary for monitoring of the resistance of sensor 200. Thus the signal-to-noise ratio for sensor 200 is significantly larger than that for sensor 100. Moreover, commercially-available off-the-shelf instruments and components are better suited to measurement of resistances of order 100 Ω to 1000 Ω than to measurement of resistances of order 1 Ω. For example, a commonly available 20 mA current source would, in the case of sensor 100, provide a signal of amplitude 20 mV. Whilst such signals are measurable, robust measurement techniques are required where the sensor, in use, may be subjected to harsh environmental conditions, as will occur where the sensor is used to monitor corrosion of aircraft components. In contrast, a 20 mA current source used in conjunction with sensor 200 results in a signal of amplitude 2 V to 20 V, which signal is easily measurable using robust, commercially-available, off-the-shelf instruments.

A further advantage of sensor 200 is that the overall wettability of the area underneath each defect remains very similar to that of the bulk material, since only a small part of the exposed area (that separating the conducting tracks from the conducting regions) is of a different material to the bulk. It is well known that the rate of corrosion of a surface is related to the wettability of that surface. Moreover, the protective effect of inhibitor ions leaching out from surrounding paint will also be strongly dependent on the wettability of the surface beneath the defects. Therefore, it is important that the wettability of the exposed surface underneath the paint defects is kept as similar as possible to that of the bulk surface in order for the effect of corrosive media on the sensor 200 to be representative of the effect of corrosive media on the bulk.

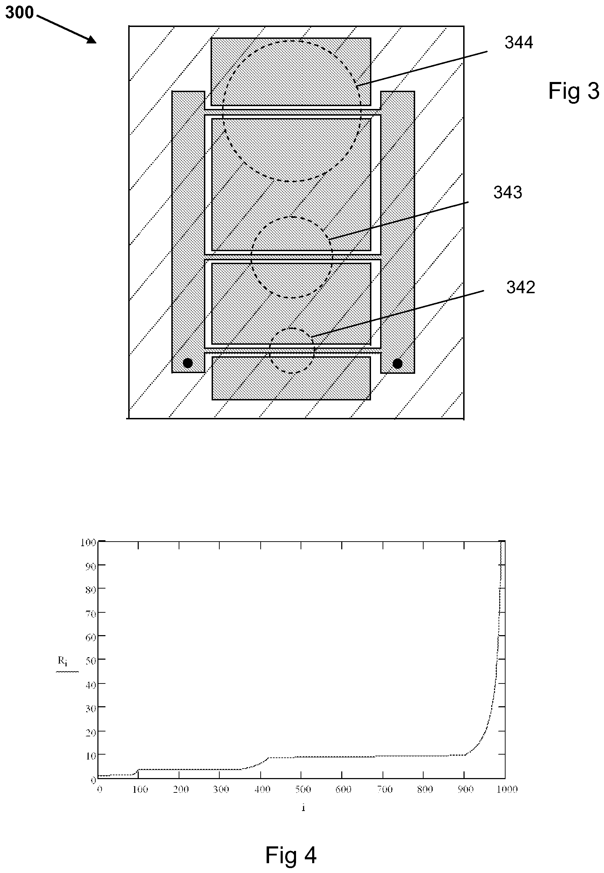

Figure 3 shows a sensor 300 in accordance with a second embodiment of the invention. Sensor 300 is similar to sensor 200 described above, and features similar to those described above in relation to sensor 200 have been given like reference numerals, incremented by 100. Sensor 300 is substantially the same as sensor 200, except in that the defects 342, 343, 344 in the paint covering of sensor 300 are circular, rather than rectangular. It has been found that, where the sensor 200 is mounted on a vehicle, corrosion of the conducting tracks occurs anisotropically. It is thought that this anisotropic corrosion is due to the rectangular shape of the defects 242, 243, 244: the rate of corrosion is dependent on the orientation of the defect relative to the direction of flow across the defect. Previously, it has been necessary to account to this anisotropy by mounting sensors in carefully chosen locations with a number of different orientations. However, the anisotropic effect can be avoided by using circular defects, such as defects 342, 343, 344 provided in the paint covering sensor 300. Since the parts of sensor 300 that are exposed to corrosive media are substantially the same when viewed from any direction, the orientation of the sensor relative to any one particular direction of travel does not have any effect on the rate of corrosion of the tracks.

Previously, circular defects have not been introduced into inhibitor depletion sensors because of the need to ensure that the exposed areas consist only of track material. Were a circular area to be used in such conditions, its diameter would be restricted to the width of its respective conducting track. This would result in either the track being unacceptably wide, and having a correspondingly low resistance, or in the possible size of the defect being too small, so that the effects of corrosion would not be observable on a reasonable time scale.

Sensors 200 and 300 are used to measure the effects of corrosion in the same way. When mounted in situ, for example on a joint between two components on the internal frame of an aircraft, or on an external surface of a seaplane, an intermittent current signal is passed across common terminals and a voltage signal measured. The resistance of the sensor can be trivially calculated from the measured voltage signal. Typically, the measured resistance will be approximately constant for a period of time before beginning to increase as the track beneath the largest defect begins to corrode, once the reservoir of inhibitor around this defect is exhausted. The resistance of the sensor will then continue to increase until this track has corroded through, at which point the resistance becomes constant again. Once the track beneath the intermediate-sized defect begins to corrode, the resistance will again begin to increase, until the second track has corroded through. As will be clear to those skilled in the art, the resultant profile of resistance with time will have a stepped appearance, with each step occurring at the time at which one of the conducting tracks corroded through. An example of the expected resistance profile is shown in Figure 4, which illustrates data obtained using computer modelling techniques. The expected variation of resistance (R) with time (i) is shown in arbitrary units. Similar profiles are obtained in practice, albeit with additional noise in the resistance data. In the example shown, corrosion of the tracks begins at times 90, 350, and 900, and the tracks corrode completely through at times 100, 420, and 1000. Thus times 90, 350, and 900 can be associated with the times at which the inhibitor concentration in the paint is no longer sufficient to protect a defect of a given size against corrosion.

Sensors 200, 300 are fabricated in a similar manner to prior-known sensors. The thin film layers from which the corrosive tracks are made are preferably deposited on the substrate by sputtering. In order to improve the degree to which the corrosive characteristics of the thin film tracks mimic the bulk alloy, the thin film layer can be annealed following sputtering to encourage growth of metallic grains within the thin layer to produce a thin film which is essentially a two-dimensional array of metallic grains. Enhancing the grain size after sputtering by annealing enhances the capability of the sensors to specifically detect localised corrosion, at the early stages of its growth. Since localised corrosion initiates at specific sites such as grain boundaries, specific intermetallic phases etc, production of thin films of metal alloys with similar compositions of the intermetallic phases and grain boundaries of the bulk metal alloys concerned enhances detection of such localised corrosion. By subsequent photolithographic patterning, the films are structured into the above described track forms.

An alternative method of fabrication of sensors 200, 300 omits the step of annealing the as-sputtered conductive thin films. Because the sensitivity to corrosion of the tracks can be controlled, to an extent, by adjusting the width of the gap between the conducting tracks and the conducting regions, it is possible, through empirical observation, to adjust the width of the gap such that the sensitivity to corrosion of a non-annealed conducting track can be increased to be equal to that of an annealed track. This alternative method thus involves fewer manufacturing steps, and sensors according to the above-described embodiments of the invention can therefore be fabricated more simply than prior-known corrosion sensors such as corrosion sensor 100.

The thickness of the corrosive tracks is selected in accordance with the material from which the tracks are formed and the type of application for the microsensor. For example, for monitoring components in a marine environment the rate of corrosion is relatively high, and therefore a relatively thick film is used, for example, in the case of an aluminium alloy, corrosive tracks in the region of 50µm to 500µm in thickness are used. However, for other applications in which the environment in which the microsensor is to be placed is less corrosive, higher sensitivity to corrosion is required, and therefore thinner films are used to form the corrosive tracks. In the case of monitoring non-marine aircraft components, the thickness of the corrosive tracks is preferably between 0.5 µm and 10 µm, for example approximately 1.5µm.

The paint, that in the present embodiment is PR205 in combination with a suitable topcoat, can be applied by spraying, whilst the defects in the paint can be formed either through use of a simple physical mask (such as masking tape) during paint application, which mask can then be removed after the application of the paint. Alternatively, chemical and dry etching techniques are possible. Suitable chemical etchants and masks can be chosen in dependence on the type of paint used. One etchant that can be used for PR205 is ethylene glycol. Using these techniques, defects having widths between 50 µm and 8 mm can be fabricated.

In particular envisaged applications, the bulk metal material to be mimicked is a metallic alloy and in such cases the material used for the corrosive tracks in each of the above-described embodiments is preferably an alloy having alloying constituents in similar proportions to the respective bulk alloy being mimicked. It has been found that the proportion of each alloying constituent of the track material is generally preferred to be accurate within 3%, more preferably within 1 %, of the total constituents of the bulk alloy. Constituents having a proportion of less than 1 % of the bulk alloy may either be present in a similar proportion, or omitted.

In preferred embodiments, in which the microsensor is to be used in a health monitoring system for aircraft, the corrosive tracks are made of an aluminium alloy, such as an aluminium copper alloy, an aluminium silicon alloy, an aluminium silicon copper alloy, etc. In particular, the material used for the corrosive tracks is preferably an alloy which closely resembles in composition one of the aluminium alloys used in the aviation components.

In a first example the track alloy is an aluminium-copper alloy having a copper constituent proportion forming in the region of 2% to 8%, preferably approximately 5%, of the mass of the alloy, such as a 2000 series aluminium alloy.

In a second example the track alloy is an aluminium-silicon alloy having a silicon constituent proportion forming in the region of 5% to 20%, preferably approximately 12%, of the mass of the alloy, such as a 4000 series aluminium alloy.

In a third example the track alloy is an aluminium-magnesium alloy having a magnesium constituent proportion forming in the region of 2% to 8%, preferably approximately 5%, of the mass of the alloy, such as a 5000 series aluminium alloy.

In a fourth example the track alloy is an aluminium-magnesium-silicon alloy having magnesium and silicon proportions each forming in the region of 0.3% to 1 .2% of the mass of the alloy, such as a 6000 series aluminium alloy.

In a fifth example the track alloy is an aluminium-zinc alloy having a zinc constituent proportion forming in the region of 2% to 8%, preferably approximately 5%, of the mass of the alloy, such as a 7000 series aluminium alloy.

In a sixth example the track alloy is an aluminium-lithium alloy having a lithium constituent proportion forming in the region of 1% to 4%, preferably approximately 2%, of the mass of the alloy, such as an 8000 series aluminium alloy.

Note that alloying constituents other than those specifically mentioned in each example above, and in lesser proportions to those specifically mentioned, may also be present in the alloys from which the tracks are made, particularly if present in the bulk alloys to be mimicked. These other alloying constituents may include one or more of magnesium, copper, manganese, silicon, iron, zinc, lithium, titanium, chromium, vanadium, zirconium, etc.

The substrate can be formed from any suitable insulating material on which a thin film of the track material can be deposited. For example, Mylar™, or polyimide can be used. Alternatively, a conducting substrate coated with an insulating layer of, for example, polyimide can be used.

Having described the invention with reference to various specific embodiments, it is noted that these embodiments are in all resects exemplary. Variations and modifications are possible without departing from the scope of the invention, which is defined in the accompanying claims. Such variations and modifications will be immediately obvious to those skilled in the art. For example, whilst in the above, it has been described to use straight conducting tracks between conducting terminals, it will be understood by those skilled in the art that it is possible to use tracks of a different configuration. Serpentine tracks could be used, optionally in conjunction with complementarily shaped conducting regions.

Furthermore, whilst, in the above described examples, it has been described to use three conducting tracks running between the common terminals, it will be appreciated that any number of conducting tracks could be used. An indication of when corrosion has begun to have an effect can be obtained from a sensor having just one conducting track, whilst a sensor having a larger number of conducting tracks can be used to give a better indication of the progression of the effects of corrosion on a structure over a more extended period of time. Clearly, as the number of conducting tracks increases, the resistance of the as-manufactured sensor will decrease, but it is expected that this effect is unlikely to be significant for up to ten tracks. As those skilled in the art will appreciate, the resistance of the as-manufactured sensor will only fall to the prior art value of 1 Ω when there are approximately 2000 tracks on the sensor.

Those skilled in the art will appreciate that the resistance of sensors in accordance with embodiments of the present invention can be measured using a Wheatstone bridge arrangement. Such methods enable the resistance of the sensor to be accurately measured through sensing of a null in the bridge current once balance has been achieved. Conveniently, at least some of the bridge resistors can be fabricated on the sensor substrate.

It is also possible to modify the sensors 200, 300 as described above such that the substrate is almost entirely covered with the conductive thin film. Such a modification ensures that the paint will stick to the sensor more uniformly. As those skilled in the art will appreciate, paint will not stick to the material of the substrate to the same degree that it will adhere to the conductive thin film, and therefore, by ensuring that the substrate is substantially entirely covered with the conductive film (leaving only gaps to define the conducting tracks 222, 223, 224 and terminals 226, 227, in the example of sensor 200), it can be ensured that the sensor mimics more closely the behaviour of the bulk structure.

Those skilled in the art will also appreciate that, whilst it has been described in the above to use commercially available paints, it will be necessary, where the sensors are to be retro-fitted to existing vehicles, to mix paint with an appropriate inhibitor ion concentration, in order to mimic the effect of the age of the paint on the structure to be monitored. It is also noted that paints comprising corrosion inhibitors are widely available from a number of manufacturers, including Akzo Nobel, Anac, and Indestructible Paints, which manufacturers are able to supply equivalents to the PR205 primer paint used in the above-described embodiments of the invention. Moreover, it is also envisaged to use paints comprising corrosion inhibitors other than chromate ions. Such paints are expected to become more widely used in the future because of the potential hazards of chromate-containing paints. It will also be understood that it may be desirable to anodise the surface of the conductive film, or to apply a conversion coating prior to applying the corrosion-inhibiting primer paint. Such a treatment enhances the ability of the paint to adhere to the metal surface. Conversion coating can be achieved using Alodine. Anodising, which results in a thicker oxide layer on the surface of the aluminium layer, is achieved by placing the sensor in a highly oxidising liquid that includes chromate prior to application of the primer paint.

Furthermore, in the above, it has been described to use the corrosion sensors on aluminium and aluminium alloy structures. Such structures may be aircraft, and it is envisaged that embodiments of the present invention will find particular application in the field of aviation. However, it is noted that the corrosion sensors of the present invention can be easily modified for use in any number of structures, provided that the paint used to cover the substrate, and the conductive material used to form the patterned conductive thin film, are chosen to suitably mimic the behaviour of the bulk structure in the presence of corrosive media. Alternatively, conductive materials and paints could be used that do not mimic the behaviour of a bulk structure, but that can be used to give an indication of the corrosivity of a particular environment as a reference value.

Finally, it is noted that it is to be clearly understood that any feature described above in relation to any one embodiment may be used alone, or in combination with other features described, and may also be used in combination with one or more features of any other of the embodiments, or any combination of any other of the embodiments, within the scope defined by the appended claims.

## Claims

1. A corrosion sensor (200) for detecting the action of corrosive media on a metallic material when mounted in situ adjacent a location in the metallic material, the corrosion sensor comprising:
a substrate (210); and
a patterned conductive thin film (220, 230) formed on the substrate (210);
the thin film defining:
first and second terminals (226, 227);
a first conducting track running between the first and the second terminals (226, 227); and
conducting regions (230) separated from the terminals (226, 227) and the first conducting track, and disposed adjacent either side of the first conducting track; **characterised in that** the thin film (220, 230) defines a plurality of conducting tracks (222, 223, 224) running between the first and second terminals (226, 227), and a plurality of conducting regions (230) separated from the terminals (226, 227) and the plurality of conducting tracks (222, 223, 224), the plurality of conducting regions (230) being arranged such that conducting regions (230) are disposed on either side of each of the plurality of conducting tracks (222, 223, 224).

2. A corrosion sensor (200) as claimed in claim 1, wherein the conducting regions (230) are disposed closely adjacent either side of each of the plurality of conducting tracks, such that the rate of corrosion of the respective conducting tracks is increased.

3. A corrosion sensor (200) as claimed in claim 1 or claim 2 wherein first and second gaps are defined between each of the plurality of conducting tracks (222, 223, 224) and the conducting regions (230), the gaps having a substantially uniform width.

4. A corrosion sensor (200) as claimed in claim 3 wherein the width of the gaps is less than 15 µm.

5. A corrosion sensor (200) as claimed in any one of claims 1 to 4 wherein each of the plurality of conducting tracks (222, 223, 224) is formed from a corrosive material that corrodes on exposure to corrosive media.

6. A corrosion sensor (200) as claimed in any preceding claim, further comprising paint covering substantially the whole of the substrate (210) and the thin film to form a paint layer, which paint comprises a corrosion inhibitor, and which paint layer is provided with a first defect (242) at the location of the first conducting track (222), the defect extending over at least a part of the conducting regions adjacent the first conducting track.

7. A corrosion sensor (200) as claimed in claim 6,wherein the paint layer is provided with a plurality of defects (242, 243, 244) including the first defect (242), each of the defects being provided at a location of one of the plurality of conducting tracks (222, 223, 224) and extending over at least a part of each of the conducting regions adjacent said one of the plurality of conducting tracks (222, 223, 224).

8. A corrosion sensor (200) as claimed in claim 7 wherein each of the defects is of a different size.

9. A corrosion sensor (200) as claimed in claim 7 or claim 8 wherein each of the defects has a width in the range between 0.2 mm and 8 mm.

10. A corrosion sensor (200) as claimed in any one of claims 6 to 9 wherein the first defect is substantially rectangular.

11. A corrosion sensor (200) as claimed in any one of claims 6 to 9 wherein the first defect is substantially circular.

12. A corrosion sensing system comprising a plurality of corrosion sensors according to any preceding claim.

13. A metallic structure comprising the corrosion sensing system of claim 12.

## Patentansprüche

1. Korrosionssensor (200) zum Nachweis der Wirkung von korrosiven Medien auf ein metallisches Material, wenn er *in situ* benachbart einer Position im metallischen Material montiert ist, wobei der Korrosionssensor Folgendes umfasst:
ein Substrat (210); und
eine gemusterte leitende Dünnschicht (220, 230), die auf dem Substrat (210) gebildet ist;
wobei die Dünnschicht Folgendes definiert:
erste und zweite Anschlüsse (226, 227);
eine erste leitende Spur, die zwischen den ersten und zweiten Anschlüssen (226, 227) verläuft; und
leitende Regionen (230), die von den Anschlüssen (226, 227) und der ersten leitenden Spur getrennt und benachbart beider Seiten der ersten leitenden Spur angeordnet; **dadurch gekennzeichnet, dass** die Dünnschicht (220; 230) eine Vielzahl von leitenden Spuren (222, 223, 224) definiert, die zwischen den ersten und zweiten Anschlüssen (226, 227) verlaufen, und eine Vielzahl von leitenden Regionen (230), die von den Anschlüssen (226, 227) und der Vielzahl von leitenden Spuren (222, 223, 224) getrennt ist, wobei die Vielzahl von leitenden Regionen (230) derart angeordnet ist, dass die leitenden Regionen (230) auf beiden Seiten jeder der Vielzahl von leitenden Spuren (222, 223, 224) angeordnet sind.

2. Korrosionssensor (200) nach Anspruch 1, wobei die leitenden Regionen (230) nahe benachbart auf beiden Seiten jeder der Vielzahl von leitenden Spuren angeordnet sind, sodass die Korrosionsrate der entsprechenden leitenden Spuren erhöht ist.

3. Korrosionssensor (200) nach Anspruch 1 oder Anspruch 2, wobei erste und zweite Zwischenräume zwischen jeder der Vielzahl von leitenden Spuren (222, 223, 224) und den leitenden Regionen (230) definiert sind, wobei die Zwischenräume eine im Wesentlichen gleichförmige Breite aufweisen.

4. Korrosionssensor (200) nach Anspruch 3, wobei die Breite der Zwischenräume weniger als 15 µm beträgt.

5. Korrosionssensor (200) nach einem der Ansprüche 1 bis 4, wobei jede der Vielzahl von leitenden Spuren (222, 223, 224) aus einem korrosiven Material gebildet ist, das bei Aussetzung an korrosive Medien korrodiert.

6. Korrosionssensor (200) nach einem der vorhergehenden Ansprüche, weiter umfassend Farbe, die im Wesentlichen die Gesamtheit des Substrats (210) und der Dünnschicht abdeckt, um eine Farbschicht zu bilden, wobei die Farbe einen Korrosionshemmer umfasst, und wobei die Farbschicht mit einer ersten Fehlstelle (242) an der Position der ersten leitenden Spur (222) ausgestattet ist, wobei sich die Fehlstelle über mindestens einen Teil der leitenden Regionen benachbart der ersten leitenden Spur erstreckt.

7. Korrosionssensor (200) nach Anspruch 6, wobei die Farbschicht mit einer Vielzahl von Fehlstellen (242, 243, 244) ausgestattet ist, darin eingeschlossen die erste Fehlstelle (242), wobei jede der Fehlstellen an einer Position einer der Vielzahl von leitenden Spuren (222, 223, 224) bereitgestellt ist und sich über mindestens einen Teil jeder der leitenden Regionen benachbart der einen der Vielzahl von leitenden Spuren (222, 223, 224) erstreckt.

8. Korrosionssensor (200) nach Anspruch 7, wobei jede der Fehlstellen eine verschiedene Größe aufweist.

9. Korrosionssensor (200) nach Anspruch 7 oder Anspruch 8, wobei jede der Fehlstellen eine Breite im Bereich zwischen 0,2 mm und 8 mm aufweist.

10. Korrosionssensor (200) nach einem der Ansprüche 6 bis 9, wobei die erste Fehlstelle im Wesentlichen rechteckig ist.

11. Korrosionssensor (200) nach einem der Ansprüche 6 bis 9, wobei die erste Fehlstelle im Wesentlichen kreisförmig ist.

12. Korrosionssensorsystem, umfassend eine Vielzahl von Korrosionssensoren nach einem der vorhergehenden Ansprüche.

13. Metallische Struktur, umfassend das Korrosionssensorsystem nach Anspruch 12.

## Revendications

1. Détecteur de corrosion (200) destiné à détecter l'action d'un milieu corrosif sur un matériau métallique lorsqu'il est monté in situ de manière adjacente à un emplacement dans le matériau métallique, le détecteur de corrosion comprenant :
un substrat (210) ; et
un film mince conducteur et gravé (220, 230) formé sur le substrat (210) ;
le film mince définissant :
une première et une seconde bornes (226, 227) ;
une première piste conductrice entre la première et la seconde bornes (226, 227) ; et
des zones conductrices (230) séparées des bornes (226, 227) et de la première piste conductrice, et disposées de manière adjacente à n'importe quel côté de la première piste conductrice ; **caractérisé en ce que** le film mince (220, 230) définit une pluralité de pistes conductrices (222, 223, 224) entre la première et la seconde bornes (226, 227), et une pluralité de zones conductrices (230) séparées des bornes (226, 227) et de la pluralité de pistes conductrices (222, 223, 224), la pluralité de zones conductrices (230) étant prévue de sorte que les zones conductrices (230) soient disposées de n'importe quel côté de chacune de la pluralité de pistes conductrices (222, 223, 224).

2. Détecteur de corrosion (200) selon la revendication 1, dans lequel les zones conductrices (230) sont disposées de manière étroitement adjacente de n'importe quel côté de chacune de la pluralité de pistes conductrices, de sorte que le taux de corrosion des pistes conductrices respectives soit augmenté.

3. Détecteur de corrosion (200) selon la revendication 1 ou 2, dans lequel un premier et un second espaces sont définis entre chacune de la pluralité de pistes conductrices (222, 223, 224) et les zones conductrices (230), les espaces ayant une largeur sensiblement uniforme.

4. Détecteur de corrosion (200) selon la revendication 3, dans lequel la largeur des espaces est inférieure à 15 µm .

5. Détecteur de corrosion (200) selon l'une quelconque des revendications 1 à 4, dans lequel chacune de la pluralité de pistes conductrices (222, 223, 224) est formée à partir d'un matériau corrosif qui rouille lorsqu'il est exposé à un milieu corrosif.

6. Détecteur de corrosion (200) selon l'une quelconque des revendications précédentes, comprenant en outre une peinture qui recouvre sensiblement l'intégralité du substrat (210) et le film mince afin de former une couche de peinture, ladite peinture comprenant un inhibiteur de corrosion, et ladite couche de peinture étant munie d'un premier défaut (242) à l'emplacement de la première piste conductrice (222), le défaut s'étendant sur au moins une partie des zones conductrices adjacentes à la première piste conductrice.

7. Détecteur de corrosion (200) selon la revendication 6, dans lequel la couche de peinture est munie d'une pluralité de défauts (242, 243, 244) comprenant le premier défaut (242), chacun des défauts étant prévu à un emplacement de l'une de la pluralité de pistes conductrices (222, 223, 224) et s'étendant sur au moins une partie de chacune des zones conductrices adjacentes à ladite de la pluralité de pistes conductrices (222, 223, 224).

8. Détecteur de corrosion (200) selon la revendication 7, dans lequel chacun des défauts possède une taille différente.

9. Détecteur de corrosion (200) selon la revendication 7 ou 8, dans lequel chacun des défauts possède une largeur de l'ordre de 0,2 mm à 8 mm.

10. Détecteur de corrosion (200) selon l'une quelconque des revendications 6 à 9, dans lequel le premier défaut est sensiblement rectangulaire.

11. Détecteur de corrosion (200) selon l'une quelconque des revendications 6 à 9, dans lequel le premier défaut est sensiblement circulaire.

12. Système de détection de corrosion comprenant une pluralité de détecteurs de corrosion selon l'une quelconque des revendications précédentes.

13. Structure métallique comprenant le système de détection de corrosion selon la revendication 12.
